# EUROPEAN PATENT SPECIFICATION

(11) **EP 2 934 916 B1**
(45) Date of publication and mention of the grant of the patent: **23.03.2022**
(21) Application number: 13863827.5
(22) Date of filing: 10.12.2013
(51) Int. Cl.: B60C 11/03, B60C 11/117, B60C 11/04, B60C 15/02, B60C 9/20, B60C 3/04

(54) **TBR BASED IMPLEMENT TIRE**
RADIALREIFEN MIT EINEM EINSATZ FÜR LKWS/BUSSE
PNEU POUR MACHINE AGRICOLE DE TYPE TBR

(30) Priority: 21.12.2012 US 201213723254
(43) Date of publication of application: 28.10.2015
(73) Proprietor: Bridgestone Americas Tire Operations, LLC, Nashville, TN 37201 (US)
(72) Inventor: HARRIS, Bradley J., New London, Ohio 44851 (US)
(74) Representative: Oxley, Robin John George
(86) International application number: PCT/US2013/073966
(87) International publication number: WO 2014/099452

(56) References cited:
- EP-A2- 0 937 587
- EP-A2- 1 201 462
- JP-A- 2005 219 629
- JP-A- 2010 530 831
- US-A- 5 511 599
- US-A- 5 626 698
- US-A1- 2009 056 851

## Description

### BACKGROUND OF THE INVENTION

### 1. Field of the Invention

The present invention relates to pneumatic tires, and more particularly to tires for use on non self propelled agricultural implements.

### 2. Description of the Prior Art

Conventional construction for free rolling farm implement tires has typically been of the bias ply construction utilizing a ribbed implement tread.

Also, in some instances where a heavier load carrying capacity has been needed, farmers have utilized tires originally intended for highway use on trucks and buses, commonly referred to as TBR tires, which have a radial steel reinforced body ply and steel belt construction utilizing conventional highway type tread patterns. These TBR tires have been placed in free rolling use on farm implements, and have been used at rated inflation pressures.

There is a continuing need for improvement in agricultural implement tires, particularly as tires are required to carry ever heavier loads and to function at higher speeds when in transit mode. US2009/0056851A1 discloses a heavy duty radial tire with a circumferential tread portion, a pair of bead portions, a steel reinforced radial carcass ply extending between and wrapped around the bead portions, three steel reinforced circumferentially extending belts disposed between the carcass ply and the circumferential tread portion, wherein the tire being sized to fit on a nominal 19.5 inch (0,5m) diameter rim.

Attention is also drawn to the disclosure of EP0937587A2.

### SUMMARY OF THE INVENTION

In one aspect of the present invention a pneumatic agricultural implement tire is provided as claimed in claim 1.

In another aspect of the present invention a pneumatic agricultural implement tire is provided as claimed in claim 3.

In another aspect of the present invention a method is provided as claimed in claim 11.

Numerous objects, features and advantages of the present invention will be readily apparent to those skilled in the art upon a reading of the following disclosure when taken in conjunction with the accompanying drawings.

### BRIEF DESCRIPTION OF THE DRAWINGS

Fig. 1 is a schematic plan view of a farm implement, in this case a wing fold type seed planter being drawn by a tractor.
Fig. 2 is a schematic rear elevation view of the farm implement of Fig. 1 showing the wing portions of the planter in operational mode in solid lines, and folded up into transport mode in dashed lines.
Fig. 3 is a cross-sectional view of one embodiment of a tire of the present invention.
Fig. 4 is a laid out view of the tread portion of the tire.

### DETAILED DESCRIPTION OF THE INVENTION

Following are definitions of selected terms employed herein. The definitions include various examples and/or forms of components that fall within the scope of a term and that may be used for implementation. The examples are not intended to be limiting. Both singular and plural forms of terms may be within the definitions.

"Aspect ratio" means the ratio of the tire's section height to its section width.

"Axial" and "axially" refer to directions which are parallel to the axis of rotation of a tire.

"Bead" or "bead core" refers to that part of a tire comprising an annular tensile member, the bead core, wrapped by ply cords and shaped, with or without other reinforcement elements to fit a designed tire rim.

"Belt" or "belt ply" refers to an annular layer or ply of parallel cords, woven or unwoven, underlying the tread, not anchored to the bead.

"Carcass" refers to the tire structure apart from the belt structure, tread, undertread, and sidewall rubber but including the beads, (carcass plies are wrapped around the beads).

"Circumferential" refers to lines or directions extending along the perimeter of the surface of the annular tread perpendicular to the axial direction.

"Cord" means one of the reinforcement strands of which the plies in the tire are comprised.

"Crown" refers to substantially the outer circumference of a tire where the tread is disposed.

"Equatorial plane (EP)" refers to a plane that is perpendicular to the axis of rotation of a tire and passes through the center of the tire's tread.

"Inner liner" means the layer or layers of elastomer or other material that form the inside surface of a tubeless tire and that contain the inflating fluid within the tire.

"Nominal rim diameter" means the average diameter of the rim flange at the location where the bead portion of the tire seats.

"Ply" means a continuous layer of rubber coated parallel cords.

"Radial" and "radially" refer to directions that are perpendicular to the axis of rotation of a tire.

"Radial-ply" or "radial-ply tire" refers to a belted or circumferentially-restricted pneumatic tire in which the ply cords which extend from bead to bead are laid at cord angles between 65 degree and 90 degree with respect to the equatorial plane of the tire.

"Section height" (SH) means the radial distance from the base of the bead core to the outer diameter of the tire at its equatorial plane.

"Section width" (SW) means the maximum linear distance parallel to the axis of the tire and between the exterior of its sidewalls when and after it has been inflated at normal inflation pressure for 24 hours, but unloaded, excluding elevations of the sidewalls due to labeling, decoration or protective bands.

"Turn-up height" (TH) means the radial distance from the base of the bead core to the upper end of the turn-up.

Directions are also stated in this application with reference to the axis of rotation of the tire. The terms "upward" and "upwardly" refer to a general direction towards the tread of the tire, whereas "downward" and "downwardly" refer to the general direction towards the axis of rotation of the tire. Thus, when relative directional terms such as "upper" and "lower" are used in connection with an element, the "upper" element is spaced closer to the tread than the "lower" element. Additionally, when relative directional terms such as "above" or "below" are used in connection with an element, an element that is "above" another element is closer to the tread than the other element. The terms "axially inward" and "axially inwardly" refer to a general direction towards the equatorial plane of the tire, whereas "axially outward" and "axially outwardly" refer to a general direction away from the equatorial plane of the tire and towards the sidewall of the tire.

To the extent that the term "includes" or "including" is used in the specification or the claims, it is intended to be inclusive in a manner similar to the term "comprising" as that term is interpreted when employed as a transitional word in a claim. Furthermore, to the extent that the term "or" is employed (e.g., A or B) it is intended to mean "A or B or both." When the applicants intend to indicate "only A or B but not both" then the term "only A or B but not both" will be employed. Thus, use of the term "or" herein is the inclusive, and not the exclusive use. See, Bryan A. Garner, A Dictionary of Modern Legal Usage 624 (2d. Ed. 1995). Also, to the extent that the terms "in" or "into" are used in the specification or the claims, it is intended to additionally mean "on" or "onto." Furthermore, to the extent the term "connect" is used in the specification or claims, it is intended to mean not only "directly connected to," but also "indirectly connected to" such as connected through another component or multiple components.

The following unit conversions are relevant for the description: 1 psi ≈ 6894.76 pascal; 1 inch ≈ 0.0254 meter and 1 pound ≈ 0.453592 kg.

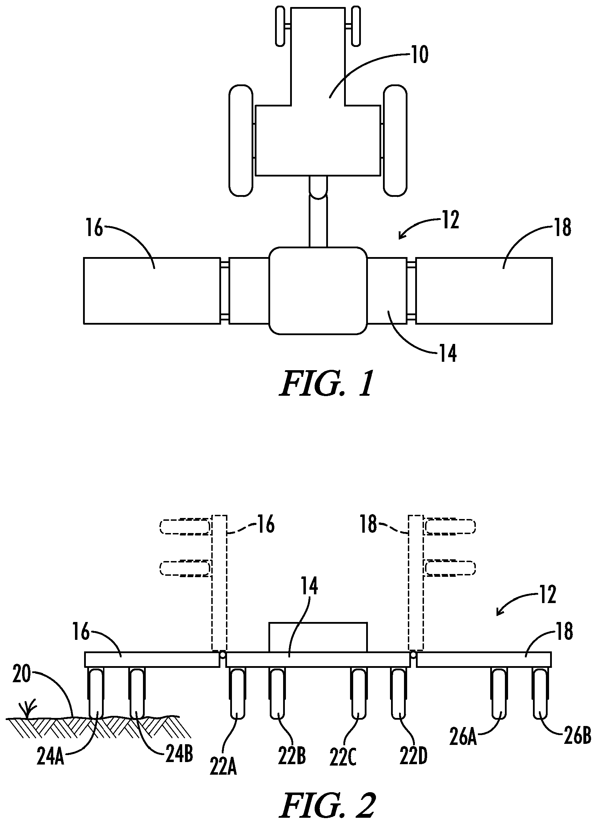

In Fig. 1, a schematic plan view is shown of a tractor 10 pulling a free wheeled agricultural implement which in the case illustrated is a wing fold type seed planter 12. The seed planter 12 includes a center portion 14 and left and right wing portions 16 and 18.

As seen in Fig. 2, the center portion 14 and the wing portions 16 and 18 are each supported from the ground surface 20 by a plurality of pneumatic tires mounted on wheel rims. In the illustration of Fig. 2, the center portion 14 is carried by four center portion tires 22A, 22B, 22C and 22D. The wing portion 16 is carried on two wing portion tires 24A and 24B and the wing portion 18 is carried on two wing portion tires 26A and 26B.

When the planter 12 is to be transported along the public highways from one field to another, the wing portions 16 and 18 may fold up into the position shown in phantom lines in Fig. 2. Thus, in the transport mode, the center portion wheels 22A-22D must carry the total combined weight of the planter 12. Thus, the center portion wheels 22A-22D are typically of larger and heavier construction than are the wing portion wheels 24A and 24B and 26A and 26B.

In one embodiment, the pneumatic agricultural implement tires of the present invention are particularly suitable for use as the center portion tires 22A-22D of a fold up seed planter such as shown in Fig. 2. In general the tires of the present invention are suitable for use on many different types of free wheeling agricultural implements including corn planters, tillage equipment, disc implements, rippers, field cultivators, air seeders and the like.

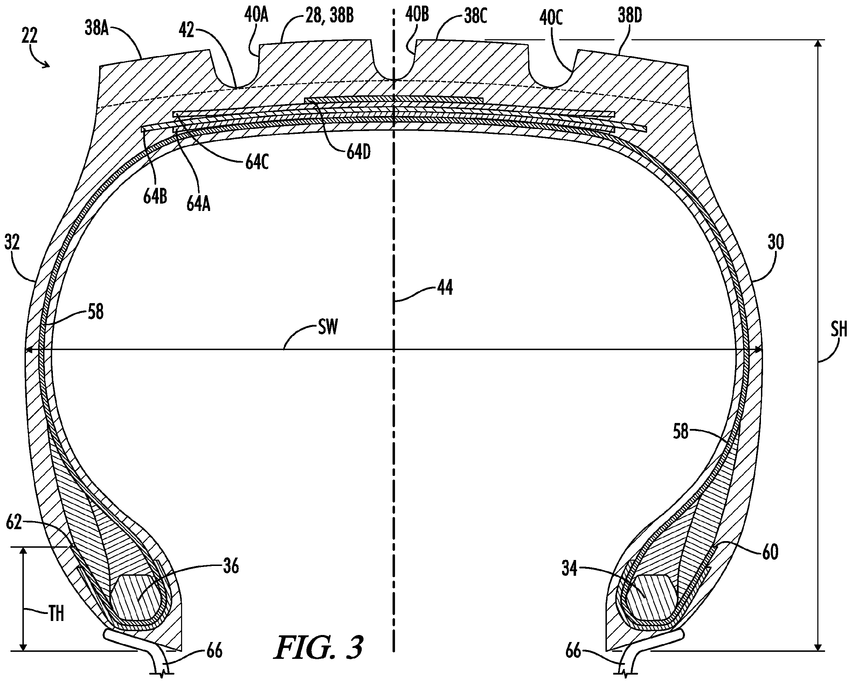

In Fig. 3 a cross-sectional view is shown of one of the tires 22. The tire 22 includes a circumferential tread or tread portion 28, first and second sidewalls or sidewall portions 30 and 32, and first and second beads or bead portions 34 and 36. Each of the bead portions comprises a bundle of bead wires.

The circumferential tread portion 28 includes a ribbed implement tread pattern having a plurality of relatively wide parallel circumferential ribs 38A-38D separated by relatively narrow circumferential grooves 40A-40C. The ribs 38 extend upward from a tread floor 42. The tire has a section width SW, a section height SH, and a turn-up height TH.

The tire includes one or more carcass plies 58. In the embodiment illustrated there is one and only one carcass ply 58, which is preferably a steel reinforced radial carcass ply 58. The carcass ply 58 extends circumferentially about the tire, and includes an axially inner portion and axially outer portions that extend around the bead portions and extend upwardly toward the tread portion and terminate at turn-up ends 60 and 62.

A plurality of circumferentially extending belts 64 are disposed between the carcass ply 58 and the tread portion 28. In the embodiment illustrated there are four such belts 64A, 64B, 64C and 64D. The belts 64A-64D are preferably steel reinforced belts, and alternating belts may have the reinforcing cords thereof biased at alternating angles.

In general the belt package 64 may be described as including at least three steel reinforced belts. The belt package may also be described as including three or four steel reinforced belts.

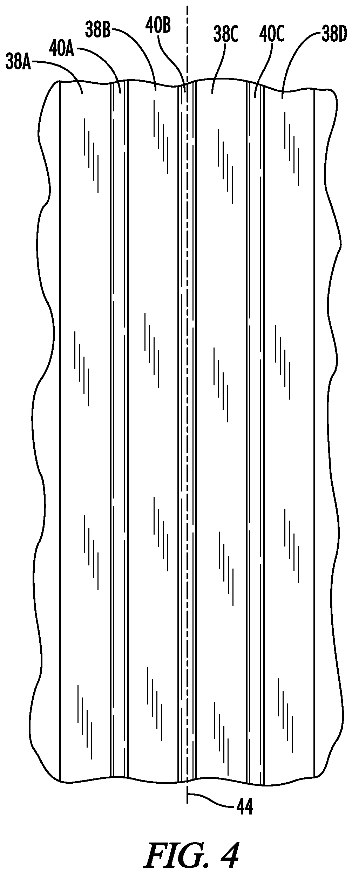

A suitable design for the carcass or body portion of the tire 22 may be achieved by utilizing an existing carcass designed for a traditional TBR tire intended for highway use on trucks and buses. This also allows existing TBR mold cavities to be utilized. The molds need only be modified in that the tread portion dies must be changed to form a ribbed implement tread pattern like that of Figs. 3 and 4, rather than the traditional TBR highway use tread patterns.

In order to reduce the damage to fields caused by the tires, the tires should be constructed to operate at relatively lower inflation pressures, in the range of from about 40 psi to about 65 psi, which are much lower than the typical 100 psi to 120 psi operating inflation pressures for TBR tires designed for highway usage. This requires the tires to operate with a sidewall deflection at their rated load and inflation pressure greater than the deflections typically encountered with TBR tires designed for highway usage.

The tires 22 should be constructed so as to operate satisfactorily with a sidewall deflection at a rated load and inflation pressure of at least about 27%, and more particularly in a range of from about 27% to about 32%. That is contrasted to the sidewall deflections encountered in typical TBR tires constructed for highway use which is typically in the range of 18 to 19%.

The sidewall deflection percentage is measured by comparing the section height SH of the tire at zero load, to the section height of the tire at rated load. The deflection percentage is the percentage decrease in section height at rated load.

The design approach described above is particularly suited for use on tire rims 66 having a nominal diameter of 19.5 inch or 22.5 inch, which are readily available for use on agricultural implements. The TBR based implement tire construction described herein may also be applied to tires designed for use on a nominal 24.5 inch diameter rim.

The tire construction described above provides a basis for construction of a tire to achieve a VF load rating for a radial implement tire. A VF load rating is defined in the 2012 Year Book published by the Tire and Rim Association, Inc. as "VF - Identifies an agricultural tire to operate at 40% higher rated load than statndard metric tires at the same inflation pressure."

The following Table I summarizes four examples of new tire sizes of the pneumatic agricultural implement tire 22 described above. The first column labeled "New Tire Size" describes the size of the four examples of the present invention. The second column labeled "New Rated Load @ Pressure" gives the rated load carrying capability of the new tire and identifies the pressure at which that rating is given. The third column labeled "Sidewall Deflection @ Load" states the percentage of sidewall deflection of the new tire when subjected to its rated load. The fourth column labeled "Old Tire Replaced" identifies a similar size prior art tire which could be replaced by the new tire. The fifth column labeled "Old Rated Load @ Pressure" gives the rated loading for the old tire.

**Table I**

| New Tire Size | New Rated Load@ Pressure | Sidewall Deflection @ Load | Old Tire Replaced | Old Rated Load @ Pressure |
|---|---|---|---|---|
| VF 245/70R19.5 | 4680 Lb @ 58 psi | 30.7% | 245/70R19.5 TBR tire | 4540 Lb @ 110 psi |
| VF 295/75R22.5 | 6400 Lb @ 52 psi | 29.7% | 295/75R22.5 TBR tire | 6175 Lb @ 110 psi |
| VF 385/65R22.5 | 9350 Lb @ 58 psi | Not available | 14L-16.1 | 5200 Lb @ 52 psi |
| VF 445/65R22.5 | 12,800 Lb @ 64 psi | Not available | 19L-16.1 | 6600 Lb @ 36 psi |

Thus, the first example is a tire of size VF 245/70R19.5 which is rated for a load of at least 4680 pounds at a cold inflation pressure of 58 psi. The tire has a sidewall deflection at load of 30.7 %. It is suitable for replacement of a 245/70R19.5 TBR type tire which is rated for a load of 4540 pounds at a cold inflation pressure of 110 psi.

It is noted that in the first and second examples in the table, the most commonly used prior art tire which would be replaced by this tire is a similarly sized TBR tire designed for highway usage.

Because the tires 22 are designed for use at relatively low inflation pressures with relatively high wall flexibility, they are not suitable for highway usage on trucks and buses, and thus preferably their sidewalls are permanently marked with an indicia indicating that the tire is not for highway service. This is to avoid a user mistakenly placing the tire on a truck or bus being operated at highway speeds.

## Claims

1. A pneumatic agricultural implement tire (22), comprising:
a circumferential tread portion (28) including a ribbed implement tread pattern having a plurality of relatively wide parallel circumferential ribs (38A-38D) separated by relatively narrow circumferential grooves (40A-40C);
a pair of bead portions (34, 36);
a steel reinforced radial carcass ply (58) extending between and wrapped around the bead portions (34, 36);
at least three steel reinforced circumferentially extending belts (64A-64D) disposed between the carcass ply (58) and the circumferential tread portion (28);
the tire (22) being sized to fit on one of a nominal 19.5 inch (0.50m) or 22.5 inch (0.57m) or 24.5 inch (0.62m) diameter rim (66);
the tire (22) having a sidewall deflection at rated load and inflation pressure of at least about 27%; and
the tire (22) having a VF load rating in accordance with the standards of the Tire and Rim Association,
wherein the sidewall deflection is the percentage decrease in section height (SH) of the tire (22) at rated load from the section height (SH) of the tire (22) at zero load, and the section height (SH) is the radial distance from a base of a bead portion (34, 36) to the outer diameter of the tire (22) at its equatorial plane.

2. The tire (22) of claim 1, wherein:
the sidewall deflection at rated load and inflation pressure is less than about 32%.

3. A pneumatic agricultural implement tire (22), comprising:
a tire body of TBR construction including at least one steel reinforced body ply (58) and at least three circumferential steel reinforced belts (64A-64D), the tire body being constructed to fit on one of a nominal 19.5 inch (0.50m) or 22.5 inch (0.57m) or 24.5 inch (0.62m) diameter rim (66);
a tread portion (28) on the tire body, the tread portion (28) including a ribbed implement tread pattern; and
the tire (22) having a maximum load rating at a maximum inflation pressure resulting in a sidewall deflection of at least about 27%,
wherein the sidewall deflection is the percentage decrease in section height (SH) of the tire (22) at rated load from the section height (SH) of the tire (22) at zero load, and the section height (SH) is the radial distance from a base of a bead portion (34, 36) to the outer diameter of the tire (22) at its equatorial plane.

4. The tire (22) of claim 3, wherein the sidewall deflection is less than about 32%.

5. The tire (22) of claim 1 or claim 3, wherein:
the tire (22) is a size VF 245/70R19.5 and is rated for a load of at least about 4680 pounds (2123 kg) at a cold inflation pressure of 58 psi (399896 Pa); the tire (22) is a size VF 295/75R22.5 and is rated for a load of at least about 6400 pounds (2903 kg) at a cold inflation pressure of 52 psi (358527 Pa); the tire (22) is a size VF 385/65R22.5 and is rated for a load of at least about 9350 pounds (4241 kg) at a cold inflation pressure of 58 psi (399896 Pa); or the tire (22) is a size VF 445/65R22.5 and is rated for a load of at least about 12,800 pounds (5806 kg) at a cold inflation pressure of 64 psi (441264 Pa).

6. The tire (22) of claim 1 or claim 3, wherein:
the tire (22) is permanently marked with an exterior indicia stating that the tire (22) is not for highway service.

7. The tire (22) of claim 1, wherein:
the tire (22) has one and only one steel reinforced carcass ply (58).

8. The tire (22) of claim 3, wherein:
the tire (22) has one and only one steel reinforced body ply (58).

9. The tire (22) of claim 1 or claim 3, wherein:
the at least three belts (64A-64D) comprise no more than four belts (64A-64D).

10. The tire (22) of claim 3, wherein:
the tire (22) has a VF load rating in accordance with the standards of the Tire and Rim Association.

11. A method of manufacturing a pneumatic agricultural implement tire (22), the method comprising:
providing a tire body of TBR construction including at least one steel reinforced body ply (58) and at least three circumferential steel reinforced belts (64A-64D), the tire body being constructed to fit on one of a nominal 19.5 inch (0.50m) or 22.5 inch (0.57m) or 24.5 inch (0.62m) diameter rim (66);
providing a tread portion (28) on the tire body, the tread portion (28) including a ribbed implement tread pattern; and
constructing the tire (22) to have a maximum load rating at a maximum inflation pressure resulting in a sidewall deflection of at least about 27%,
wherein the sidewall deflection is the percentage decrease in section height (SH) of the tire (22) at rated load from the section height (SH) of the tire (22) at zero load, and the section height (SH) is the radial distance from a base of a bead portion (34, 36) to the outer diameter of the tire (22) at its equatorial plane.

12. The method of claim 11, wherein the sidewall deflection is less than about 32%.

13. The method of claim 11, wherein:
the constructing step further comprises constructing the tire (22) to have a VF load rating in accordance with the standards of the Tire and Rim Association.

## Patentansprüche

1. Luftreifen (22) für landwirtschaftliche Geräte, umfassend:
einen in Umfangsrichtung verlaufenden Laufflächenabschnitt (28), der ein geripptes Gerätelaufflächenprofil einschließt, das eine Vielzahl von relativ breiten, parallelen umlaufenden Rippen (38A bis 38D) aufweist, die durch relativ schmale, in Umfangsrichtung verlaufende Rillen (40A bis 40C) getrennt sind;
ein Paar Wulstabschnitte (34, 36);
eine stahlverstärkte radiale Karkassenlage (58), die sich zwischen den Wulstabschnitten (34, 36) erstreckt und diese umwickelt;
mindestens drei stahlverstärkte, in Umfangsrichtung verlaufende Bänder (64A bis 64D), die zwischen der Karkassenlage (58) und dem in Umfangsrichtung verlaufenden Laufflächenabschnitt (28) angeordnet sind;
wobei der Reifen (22) so bemessen ist, dass er auf eine Felge (66) mit einem Nenndurchmesser von 19,5 Zoll (0,50 m) oder 22,5 Zoll (0,57 m) oder 24,5 Zoll (0,62 m) passt;
wobei der Reifen (22) bei Nennlast und Nennfülldruck eine Seitenwandauslenkung von mindestens etwa 27 % aufweist; und
wobei der Reifen (22) eine VF-Nennlast gemäß den Standards der Tire and Rim Association aufweist,
wobei die Seitenwandauslenkung die prozentuale Abnahme der Querschnittshöhe (SH) des Reifens (22) bei Nennlast von der Querschnittshöhe (SH) des Reifens (22) bei Nulllast ist und die Querschnittshöhe (SH) der radiale Abstand von einer Basis eines Wulstabschnitts (34, 36) bis zu dem Außendurchmesser des Reifens (22) an seiner Äquatorialebene ist.

2. Reifen (22) nach Anspruch 1, wobei:
die Seitenwandauslenkung bei Nennlast und Nennfülldruck weniger als etwa 32 % beträgt.

3. Luftreifen (22) für landwirtschaftliche Geräte, umfassend:
einen Reifenunterbau mit TBR-Aufbau, der mindestens eine stahlverstärkte Unterbaulage (58) und mindestens drei in Umfangsrichtung verlaufende, stahlverstärkte Bänder (64A bis 64D) einschließt, wobei der Reifenunterbau so aufgebaut ist, dass er auf eine Felge (66) mit einem Nenndurchmesser von 19,5 Zoll (0,50 m) oder 22,5 Zoll (0,57 m) oder 24,5 Zoll (0,62 m) passt;
einen Laufflächenabschnitt (28) auf dem Reifenunterbau, wobei der Laufflächenabschnitt (28) ein geripptes Gerätelaufflächenmuster einschließt; und
wobei der Reifen (22) eine maximale Nennlast bei maximalem Fülldruck aufweist, die zu einer Seitenwandauslenkung von mindestens etwa 27 % führt,
wobei die Seitenwandauslenkung die prozentuale Abnahme der Querschnittshöhe (SH) des Reifens (22) bei Nennlast von der Querschnittshöhe (SH) des Reifens (22) bei Nulllast ist und die Querschnittshöhe (SH) der radiale Abstand von einer Basis eines Wulstabschnitts (34, 36) bis zu dem Außendurchmesser des Reifens (22) an seiner Äquatorialebene ist.

4. Reifen (22) nach Anspruch 3, wobei die Seitenwandauslenkung weniger als etwa 32 % beträgt.

5. Reifen (22) nach Anspruch 1 oder Anspruch 3, wobei:
der Reifen (22) eine Größe von VF 245/70R19.5 aufweist und für eine Last von mindestens etwa 4.680 Pounds (2.123 kg) bei einem Kaltfülldruck von 58 psi (399.896 Pa) eingestuft ist; der Reifen (22) eine Größe von VF 295/75R22.5 aufweist und für eine Last von mindestens etwa 6.400 Pounds (2.903 kg) bei einem Kaltfülldruck von 52 psi (358.527 Pa) eingestuft ist; der Reifen (22) eine Größe von VF 385/65R22.5 aufweist und für eine Last von mindestens etwa 9.350 Pounds (4.241 kg) bei einem Kaltfülldruck von 58 psi (399.896 Pa) eingestuft ist; der Reifen (22) eine Größe von VF 445/65R22.5 aufweist und für eine Last von mindestens etwa 12.800 Pounds (5.806 kg) bei einem Kaltfülldruck von 64 psi (441.264 Pa) eingestuft ist.

6. Reifen (22) nach Anspruch 1 oder Anspruch 3, wobei:
der Reifen (22) mit einem äußeren Zeichen fest markiert ist, das angibt, dass der Reifen (22) nicht zur Verwendung auf Autobahnen vorgesehen ist.

7. Reifen (22) nach Anspruch 1, wobei:
der Reifen (22) eine und nur eine stahlverstärkte Karkassenlage (58) aufweist.

8. Reifen (22) nach Anspruch 3, wobei:
der Reifen (22) eine und nur eine stahlverstärkte Unterbaulage (58) aus Stahl aufweist.

9. Reifen (22) nach Anspruch 1 oder Anspruch 3, wobei:
die mindestens drei Bänder (64A bis 64D) nicht mehr als vier Bänder (64A bis 64D) umfassen.

10. Reifen (22) nach Anspruch 3, wobei:
wobei der Reifen (22) eine VF-Nennlast gemäß den Standards der Tire and Rim Association aufweist.

11. Verfahren zum Herstellen eines Luftreifens (22) für landwirtschaftliche Geräte, wobei das Verfahren umfasst:
Bereitstellen eines Reifenunterbaus mit TBR-Aufbau, der mindestens eine stahlverstärkte Unterbaulage (58) und mindestens drei in Umfangsrichtung verlaufende, stahlverstärkte Bänder (64A bis 64D) einschließt, wobei der Reifenunterbau so aufgebaut ist, dass er auf eine Felge (66) mit einem Nenndurchmesser von 19,5 Zoll (0,50 m) oder 22,5 Zoll (0,57 m) oder 24,5 Zoll (0,62 m) passt;
Bereitstellen eines Laufflächenabschnitts (28) auf dem Reifenunterbau, wobei der Laufflächenabschnitt (28) ein geripptes Gerätelaufflächenmuster einschließt; und
Aufbauen des Reifens (22), sodass er eine maximale Nennlast bei maximalem Fülldruck aufweist, die zu einer Seitenwandauslenkung von mindestens etwa 27 % führt,
wobei die Seitenwandauslenkung die prozentuale Abnahme der Querschnittshöhe (SH) des Reifens (22) bei Nennlast von der Querschnittshöhe (SH) des Reifens (22) bei Nulllast ist und die Querschnittshöhe (SH) der radiale Abstand von einer Basis eines Wulstabschnitts (34, 36) bis zu dem Außendurchmesser des Reifens (22) an seiner Äquatorialebene ist.

12. Verfahren nach Anspruch 11, wobei die Seitenwandauslenkung weniger als etwa 32 % beträgt.

13. Verfahren nach Anspruch 11, wobei:
der Aufbauschritt ferner das Aufbauen des Reifens (22) umfasst, sodass er eine VF-Nennlast gemäß den Standards der Tire and Rim Association aufweist.

## Revendications

1. Pneumatique de machine agricole (22), comprenant :
une partie bande de roulement circonférentielle (28) incluant une sculpture de bande de roulement de machine nervurée ayant une pluralité de nervures circonférentielles parallèles relativement larges (38A-38D) séparées par des rainures circonférentielles relativement étroites (40A-40C) ;
une paire de parties talon (34, 36) ;
une nappe de carcasse radiale renforcée d'acier (58) s'étendant entre et enveloppée autour des parties talon (34, 36) ;
au moins trois ceintures s'étendant circonférentiellement renforcées d'acier (64A-64D) disposées entre la nappe de carcasse (58) et la partie bande de roulement circonférentielle (28) ;
le pneu (22) étant dimensionné pour s'ajuster sur une d'une jante (66) d'un diamètre nominal de 19,5 pouces (0,50 m) ou de 22,5 pouces (0,57 m) ou de 24,5 pouces (0,62 m) ;
le pneu (22) ayant une déflexion de flanc à charge et pression de gonflage nominales d'au moins environ 27 % ; et
le pneu (22) ayant une charge nominale VF en conformité avec les normes de la Tire and Rim Association,
dans lequel la déflexion de flanc est le pourcentage de diminution de hauteur de section (SH) du pneu (22) à charge nominale par rapport à la hauteur de section (SH) du pneu (22) à charge nulle, et la hauteur de section (SH) est la distance radiale à partir d'une base d'une partie talon (34, 36) jusqu'au diamètre externe du pneu (22) au niveau de son plan équatorial.

2. Pneu (22) selon la revendication 1, dans lequel :
la déflexion de flanc à charge et pression de gonflage nominales est inférieure à environ 32 %.

3. Pneumatique de machine agricole (22), comprenant :
un corps de pneu de construction TBR incluant au moins une nappe de corps renforcée d'acier (58) et au moins trois ceintures circonférentielles renforcées d'acier (64A-64D), le corps de pneu construit pour s'ajuster sur une d'une jante (66) d'un diamètre nominal de 19,5 pouces (0,50 m) ou de 22,5 pouces (0,57 m) ou de 24,5 pouces (0,62 m) ;
une partie bande de roulement (28) sur le corps de pneu, la partie bande de roulement (28) incluant une sculpture de bande de roulement de machine nervurée ; et
le pneu (22) ayant une charge nominale maximale à une pression de gonflage maximale résultant en une déflexion de flanc d'au moins environ 27 %,
dans lequel la déflexion de flanc est le pourcentage de diminution de hauteur de section (SH) du pneu (22) à charge nominale par rapport à la hauteur de section (SH) du pneu (22) à charge nulle, et la hauteur de section (SH) est la distance radiale à partir d'une base d'une partie talon (34, 36) jusqu'au diamètre externe du pneu (22) au niveau de son plan équatorial.

4. Pneu (22) selon la revendication 3, dans lequel la déflexion de flanc est inférieure à environ 32 %.

5. Pneu (22) selon la revendication 1 ou la revendication 3, dans lequel :
le pneu (22) est une taille VF 245/70R19,5 et est classé pour une charge d'au moins environ 4680 livres (2123 kg) à une pression de gonflage à froid de 58 psi (399 896 Pa) ; le pneu (22) est une taille VF 295/75R22,5 et est classé pour une charge d'au moins environ 6400 livres (2903 kg) à une pression de gonflage à froid de 52 psi (358 527 Pa) ; le pneu (22) est une taille VF 385/65R22,5 et est classé pour une charge d'au moins environ 9350 livres (4241 kg) à une pression de gonflage à froid de 58 psi (399 896 Pa) ; ou le pneu (22) est une taille VF 445/65R22,5 et est classé pour une charge d'au moins environ 12 800 livres (5806 kg) à une pression de gonflage à froid de 64 psi (441 264 Pa).

6. Pneu (22) selon la revendication 1 ou la revendication 3, dans lequel :
le pneu (22) est marqué de manière permanente avec une inscription extérieure indiquant que le pneu (22) n'est pas pour un usage routier.

7. Pneu (22) selon la revendication 1, dans lequel :
le pneu (22) a une et seulement une nappe de carcasse renforcée d'acier (58).

8. Pneu (22) selon la revendication 3, dans lequel :
le pneu (22) a une et seulement une nappe de corps renforcée d'acier (58).

9. Pneu (22) selon la revendication 1 ou la revendication 3, dans lequel :
les au moins trois ceintures (64A-64D) ne comprennent pas plus de quatre ceintures (64A-64D).

10. Pneu (22) selon la revendication 3, dans lequel :
le pneu (22) a une charge nominale VF en conformité avec les normes de la Tire and Rim Association.

11. Procédé de fabrication d'un pneumatique de machine agricole (22), le procédé comprenant :
la fourniture d'un corps de pneu de construction TBR incluant au moins une nappe de corps renforcée d'acier (58) et au moins trois ceintures circonférentielles renforcées d'acier (64A-64D), le corps de pneu étant construit pour s'ajuster sur une d'une jante (66) d'un diamètre nominal de 19,5 pouces (0,50 m) ou de 22,5 pouces (0,57 m) ou de 24,5 pouces (0,62 m) ;
la fourniture d'une partie bande de roulement (28) sur le corps de pneu, la partie bande de roulement (28) incluant une sculpture de bande de roulement de machine nervurée ; et
la construction du pneu (22) pour avoir une charge nominale maximale à une pression de gonflage maximale résultant en une déflexion de flanc d'au moins environ 27 %,
dans lequel la déflexion de flanc est le pourcentage de diminution de hauteur de section (SH) du pneu (22) à charge nominale par rapport à la hauteur de section (SH) du pneu (22) à charge nulle, et la hauteur de section (SH) est la distance radiale à partir d'une base d'une partie talon (34, 36) jusqu'au diamètre externe du pneu (22) au niveau de son plan équatorial.

12. Procédé selon la revendication 11, dans lequel la déflexion de flanc est inférieure à environ 32 %.

13. Procédé selon la revendication 11, dans lequel :
l'étape de construction comprend en outre la construction du pneu (22) pour avoir une charge nominale VF en conformité avec les normes de la Tire and Rim Association.
